# EUROPEAN PATENT SPECIFICATION

(11) **EP 3 557 151 B1**
(45) Date of publication and mention of the grant of the patent: **16.09.2020**
(21) Application number: 16923991.0
(22) Date of filing: 15.12.2016
(51) Int. Cl.: F24F 11/30, F25B 41/00, F25B 41/04, F25B 49/02, F25B 1/00

(54) **REFRIGERATION CYCLE DEVICE**
KÄLTEKREISLAUFVORRICHTUNG
DISPOSITIF À CYCLE DE RÉFRIGÉRATION

(43) Date of publication of application: 23.10.2019
(73) Proprietor: Mitsubishi Electric Corporation, Chiyoda-ku Tokyo 100-8310 (JP)
(72) Inventor: YANACHI, Satoru, Tokyo 100-8310 (JP); SHIMAZU, Yusuke, Tokyo 100-8310 (JP); HATANAKA, Kensaku, Tokyo 100-8310 (JP); KAWAI, Kazuhiko, Tokyo 100-8310 (JP); KOYAMA, Yusuke, Tokyo 100-8310 (JP); NAGANO, Tomohiro, Tokyo 100-8310 (JP)
(74) Representative: Mewburn Ellis LLP
(86) International application number: PCT/JP2016/087366
(87) International publication number: WO 2018/109894

(56) References cited:
- EP-A1- 2 400 242
- EP-A1- 3 094 167
- JP-A- 2000 193 327
- JP-A- 2002 013 781
- JP-A- 2007 132 545
- JP-A- 2007 322 023
- JP-A- 2010 196 975
- JP-A- 2013 076 491
- JP-A- 2013 076 491
- JP-A- 2016 041 987
- JP-A- 2016 223 743
- US-A1- 2014 157 821
- US-B2- 6 584 784

## Description

### TECHNICAL FIELD

The present invention relates to a refrigeration cycle apparatus which performs a low-outdoor-temperature cooling operation.

### BACKGROUND ART

A cooling operation by a refrigeration cycle apparatus may be continued for a certain period regardless of an outdoor air temperature. In an example of a server room where a server computer is operating substantially throughout a year, if increase in temperature in the server room due to heat generation from the server computer is left unaddressed, processing capability of the server computer may be lowered and the server computer may fail and be shut down. In order to prevent such a situation, a cooling operation by a refrigeration cycle apparatus is normally performed throughout a year in the server room.

In a cooling operation performed when an outdoor air temperature is lower than a reference temperature (for example, 7°C) (a low-outdoor-temperature cooling operation), an indoor temperature is normally higher than an outdoor temperature. Therefore, liquid refrigerant can evaporate in an evaporator in a room by making use of a difference between an indoor temperature and an outdoor temperature. In such a case, as in an air-conditioner disclosed in Japanese Patent Laying-Open No. 2000-193327 (PTL 1), a refrigeration cycle (a liquid pump cycle) with the use of a pump (a liquid pump) which compresses liquid refrigerant from an outdoor condenser and outputs the liquid refrigerant to an indoor evaporator may be performed instead of a refrigeration cycle by a compressor (a vapor compression cycle). The liquid pump cycle can achieve more suppressed power consumption than the vapor compression cycle.

### CITATION LIST: PATENT LITERATURE

PTL 1: Japanese Patent Laying-Open No. 2000-193327

US 6 584 784 B2 discloses a combined refrigeration system with a liquid precooling heat exchanger. EP 3 094 167 A1 discloses a refrigeration cycle system according to the preamble of claim 1.

### SUMMARY OF INVENTION

### TECHNICAL PROBLEM

An amount of liquid refrigerant necessary in a liquid pump cycle is greater than an amount of liquid refrigerant necessary in a vapor compression cycle by an amount of compression of liquid refrigerant by the liquid pump. When an amount of liquid refrigerant is insufficient, refrigerant suctioned by the liquid pump becomes wet vapor in a gas-liquid two-phase state and cavitation is highly likely occur in the liquid pump. Cavitation is a phenomenon of generation of gas refrigerant in refrigerant. When cavitation occurs in the liquid pump, the liquid pump may fail and it may be difficult to continue a low-outdoor-temperature cooling operation.

The present invention was made to solve the problem as described above and an object thereof is to improve stability of a low-outdoor-temperature cooling operation.

### SOLUTION TO PROBLEM

According to the present invention the above objective is solved by the features of claim 1. A refrigeration cycle apparatus according to the present invention performs cooling by circulation of refrigerant. The refrigeration cycle apparatus includes an evaporator, a condenser, a pump, a compressor, and a control device. The evaporator is arranged in a first space. The condenser is arranged in a second space. The pump is configured to compress the refrigerant from the condenser and output the refrigerant to the evaporator. The compressor is configured to compress the refrigerant from the evaporator and output the refrigerant to the condenser. The control device is configured to control the pump and the compressor to cool the first space. The control device is configured to turn on the pump after turn-on of the compressor while a temperature of the first space is higher than a temperature of the second space.

### ADVANTAGEOUS EFFECTS OF INVENTION

vapor compression cycle is performed by the compressor before turn-on of the pump, a rate of generation of liquid refrigerant in a condenser increases and an amount of liquid refrigerant from the condenser increases. Consequently, occurrence of cavitation in the pump is suppressed and stability in a low-outdoor-temperature cooling operation can be improved.

### BRIEF DESCRIPTION OF DRAWINGS

Fig. 1 is a functional block diagram showing a configuration of a refrigeration cycle apparatus according to a first embodiment.
Fig. 2 shows together a time chart of a frequency of a liquid pump and a time chart of a frequency of a compressor in the first embodiment.
Fig. 3 is a P-h diagram showing relation between a pressure and enthalpy of refrigerant during a period in which a liquid pump remains off and a vapor compression cycle is performed in Fig. 2.
Fig. 4 is a P-h diagram showing relation between a pressure and enthalpy of refrigerant during a period in which both of the vapor compression cycle and a liquid pump cycle are performed in Fig. 2.
Fig. 5 is a P-h diagram showing relation between a pressure and enthalpy of refrigerant during a period in which a compressor remains off and the liquid pump cycle is performed in Fig. 2.
Fig. 6 is a functional block diagram showing a configuration of a refrigeration cycle apparatus according to a second embodiment.
Fig. 7 shows together a time chart of a frequency of the liquid pump, a time chart of a frequency of the compressor, and a time chart of a degree of opening of an expansion valve in the second embodiment.
Fig. 8 is a P-h diagram showing relation between a pressure and enthalpy of refrigerant during a period in which the liquid pump remains off and the vapor compression cycle is performed in Fig. 7.
Fig. 9 is a P-h diagram showing relation between a pressure and enthalpy of refrigerant during a period in which both of the vapor compression cycle and the liquid pump cycle are performed in Fig. 7.
Fig. 10 is a P-h diagram showing relation between a pressure and enthalpy of refrigerant during a period in which the compressor remains off and the liquid pump cycle is performed in Fig. 7.
Fig. 11 is a functional block diagram showing a configuration of a refrigeration cycle apparatus according to a third embodiment.
Fig. 12 shows together a time chart of a frequency of the liquid pump, a time chart of a frequency of the compressor, and a time chart of a degree of opening of an expansion valve in the third embodiment.
Fig. 13 is a P-h diagram showing relation between a pressure and enthalpy of refrigerant during a period in which the liquid pump remains off and the vapor compression cycle is performed in Fig. 12.
Fig. 14 is a P-h diagram showing relation between a pressure and enthalpy of refrigerant during a period in which both of the vapor compression cycle and the liquid pump cycle are performed in Fig. 12.
Fig. 15 is a P-h diagram showing relation between a pressure and enthalpy of refrigerant during a period in which the compressor remains off and the liquid pump cycle is performed in Fig. 12.
Fig. 16 is a functional block diagram showing a configuration of a refrigeration cycle apparatus according to a modification of the third embodiment.

### DESCRIPTION OF EMBODIMENTS

An embodiment of the present invention will be described in detail below with reference to the drawings. The same or corresponding elements in the drawings have the same reference characters allotted and description thereof will not be repeated in principle.

### First Embodiment.

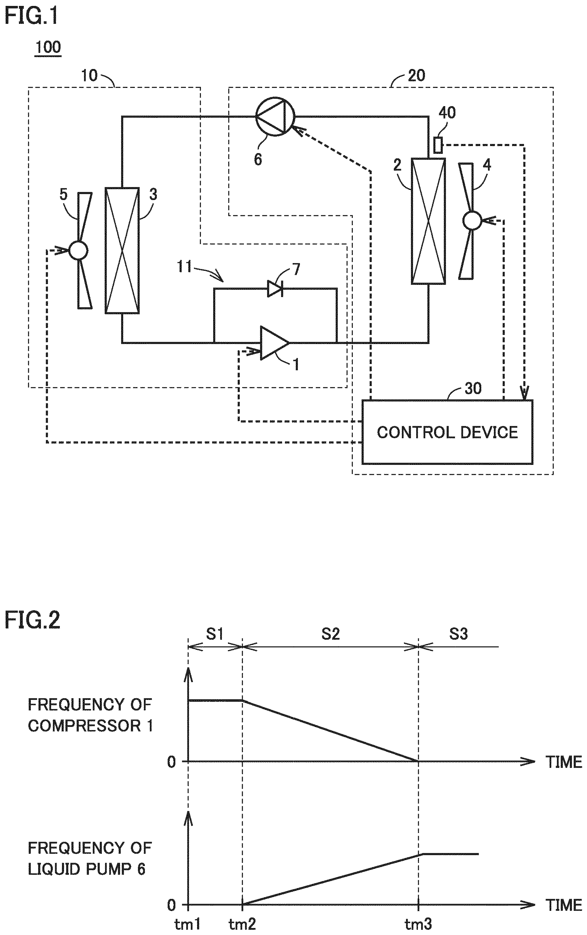

Fig. 1 is a functional block diagram showing a configuration of a refrigeration cycle apparatus 100 according to a first embodiment. As shown in Fig. 1, refrigeration cycle apparatus 100 includes an indoor unit 10 arranged indoors and an outdoor unit 20 arranged outdoors. Refrigeration cycle apparatus 100 performs a low-outdoor-temperature cooling operation.

Indoor unit 10 includes a compressor 1, an evaporator 3, an indoor fan 5, and a bypass flow path 11. Outdoor unit 20 includes a condenser 2, an outdoor fan 4, a liquid pump 6, a control device 30, and a temperature sensor 40. Control device 30 may be included in indoor unit 10 or may be included in neither of indoor unit 10 and outdoor unit 20.

Liquid pump 6 compresses liquid refrigerant (liquid refrigerant) from condenser 2 and outputs the refrigerant to evaporator 3. Control device 30 controls a drive frequency of liquid pump 6 and controls an amount of refrigerant discharged per unit time.

Evaporator 3 evaporates liquid refrigerant from liquid pump 6. In evaporator 3, liquid refrigerant evaporates by removing heat (heat of vaporization) from indoor air and becomes gaseous refrigerant (gas refrigerant), and gas refrigerant flows out of evaporator 3.

Compressor 1 compresses gas refrigerant from evaporator 3 and outputs the refrigerant to condenser 2. Control device 30 controls a drive frequency of compressor 1 and controls an amount of refrigerant discharged per unit time.

Bypass flow path 11 connects a flow path between evaporator 3 and compressor 1 and a flow path between compressor 1 and condenser 2 to each other. Bypass flow path 11 is connected in parallel to compressor 1 between evaporator 3 and condenser 2. Bypass flow path 11 includes a check valve 7. Check valve 7 allows refrigerant to pass when a pressure of refrigerant in the flow path between evaporator 3 and compressor 1 is higher than a pressure of refrigerant in the flow path between compressor 1 and condenser 2.

Outdoor fan 4 sends air to condenser 2 for promoting heat exchange between refrigerant and air in condenser 2. Control device 30 controls a rotation speed of outdoor fan 4 and controls an amount of air sent per unit time.

Indoor fan 5 sends air to evaporator 3 for promoting heat exchange between refrigerant and air in evaporator 3. Control device 30 controls a rotation speed of indoor fan 5 and controls an amount of air sent per unit time.

Temperature sensor 40 measures a temperature of refrigerant between condenser 2 and liquid pump 6. Temperature sensor 40 is implemented, for example, by a thermistor.

Control device 30 controls compressor 1, liquid pump 6, outdoor fan 4, and indoor fan 5. Control device 30 calculates a degree of supercooling of refrigerant from condenser 2 upon receiving a signal from temperature sensor 40.

When an amount of liquid refrigerant necessary in a liquid pump cycle is insufficient, refrigerant suctioned by liquid pump 6 becomes wet vapor in a gas-liquid two-phase state and cavitation is highly likely to occur in liquid pump 6. When cavitation occurs in liquid pump 6, liquid pump 6 may fail and it may be difficult to continue a low-outdoor-temperature cooling operation.

In the first embodiment, a vapor compression cycle is performed by compressor 1 for a certain period of time and thereafter liquid pump 6 is turned on. As compressor 1 performs the vapor compression cycle before turn-on of liquid pump 6, a rate of generation of liquid refrigerant is increased and an amount of liquid refrigerant from condenser 2 is increased. Consequently, occurrence of cavitation in liquid pump 6 is suppressed and stability of a low-outdoor-temperature cooling operation can be improved.

Fig. 2 shows together a time chart of a frequency of liquid pump 6 and a time chart of a frequency of compressor 1 in the first embodiment. As shown in Fig. 2, compressor 1 is turned on at time tm1 and the vapor compression cycle is performed during a period S1 from time tm1 to tm2. During period S1, an amount of refrigerant from condenser 2 is insufficient and cavitation is highly likely to occur. Therefore, liquid pump 6 remains off. Liquid pump 6 is turned on at time tm2. During a period S2 from time tm2 to tm3, a frequency of liquid pump 6 increases over time and a frequency of compressor 1 lowers over time. During period S2, the liquid pump cycle and the vapor compression cycle are simultaneously performed. During a period S3 after time tm3, compressor 1 is off and the liquid pump cycle by liquid pump 6 is performed.

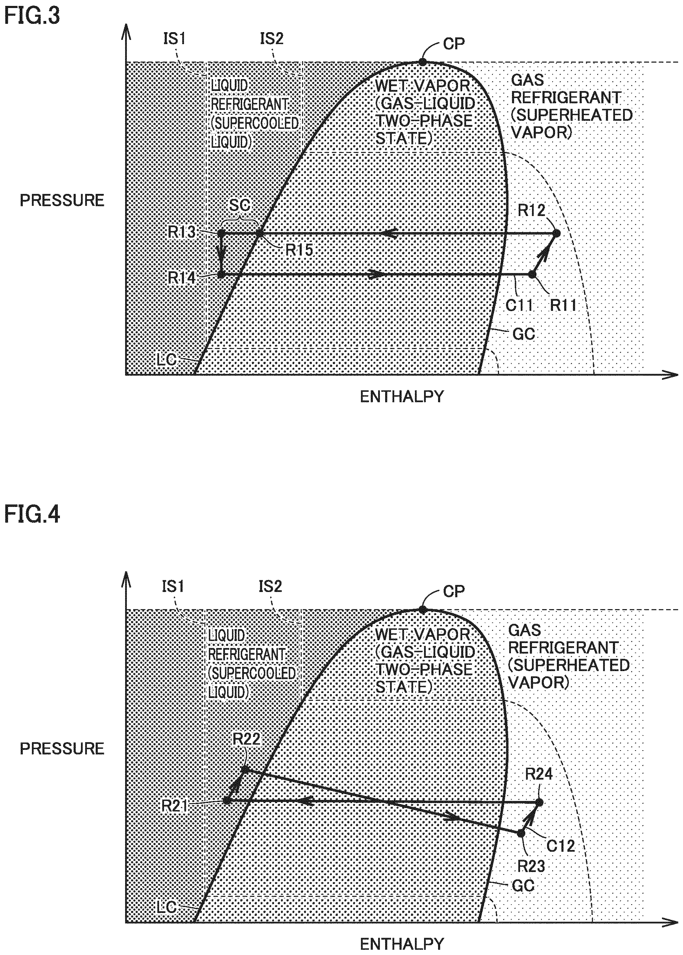

Fig. 3 is a P-h diagram (Mollier diagram) showing relation between a pressure and enthalpy of refrigerant during period S1 in Fig. 2. During period S1, the vapor compression cycle by compressor 1 is performed whereas liquid pump 6 remains off. Curves IS1 and IS2 in Fig. 3 represent isothermal lines of refrigerant corresponding to an outdoor air temperature T1 and an indoor temperature T2 (T1 > T2), respectively.

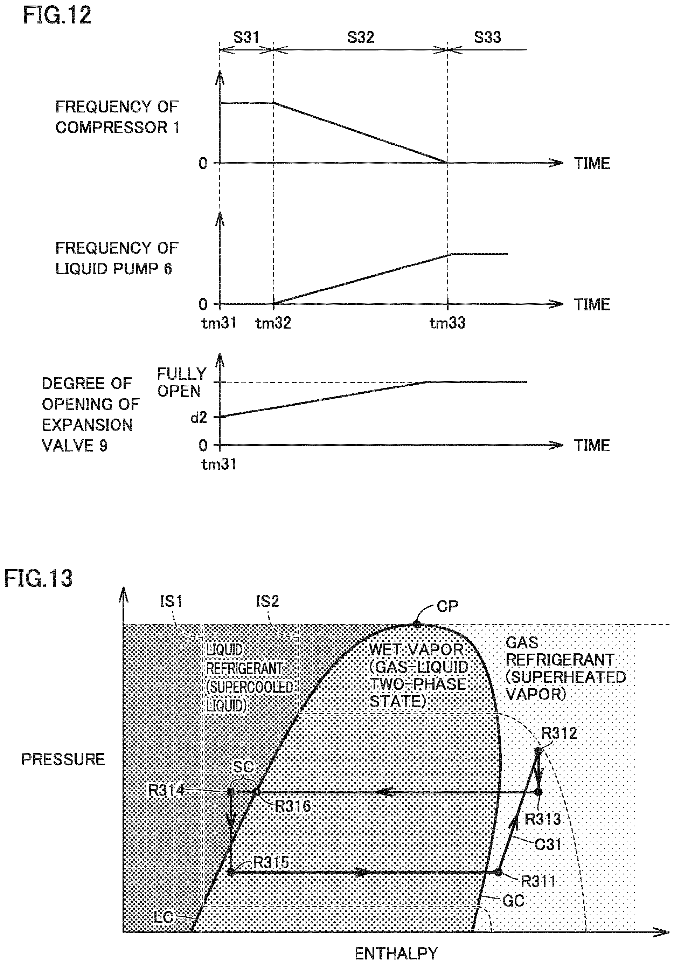

A curve LC represents a saturated liquid line of refrigerant. A curve GC represents a saturated vapor line of refrigerant. A point CP represents a critical point of refrigerant. The critical point is a point indicating a limit of a range where phase change between liquid refrigerant and gas refrigerant may occur and an intersection between the saturated liquid line and the saturated vapor line. When a pressure of refrigerant is higher than a pressure at the critical point, phase change between liquid refrigerant and gas refrigerant no longer occurs. In a region where enthalpy is lower than the saturated liquid line, refrigerant is liquid. In a region lying between the saturated liquid line and saturated vapor line, refrigerant is in a state of wet vapor. In a region where enthalpy is higher than the saturated vapor line, refrigerant is gaseous. This is also applicable to Figs. 4 and 5, Figs. 8 to 10 showing a second embodiment, and Figs. 13 to 15 showing a third embodiment.

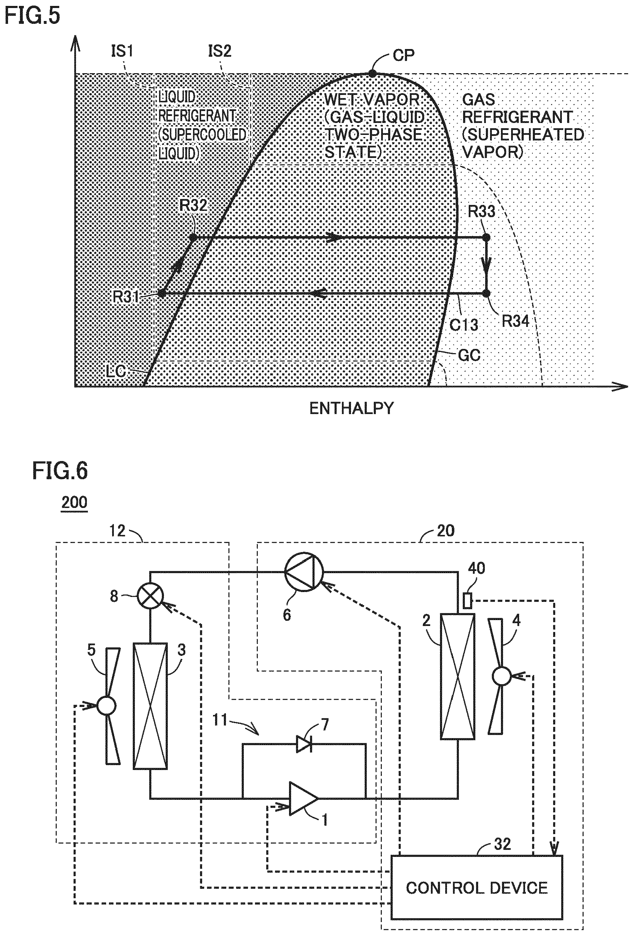

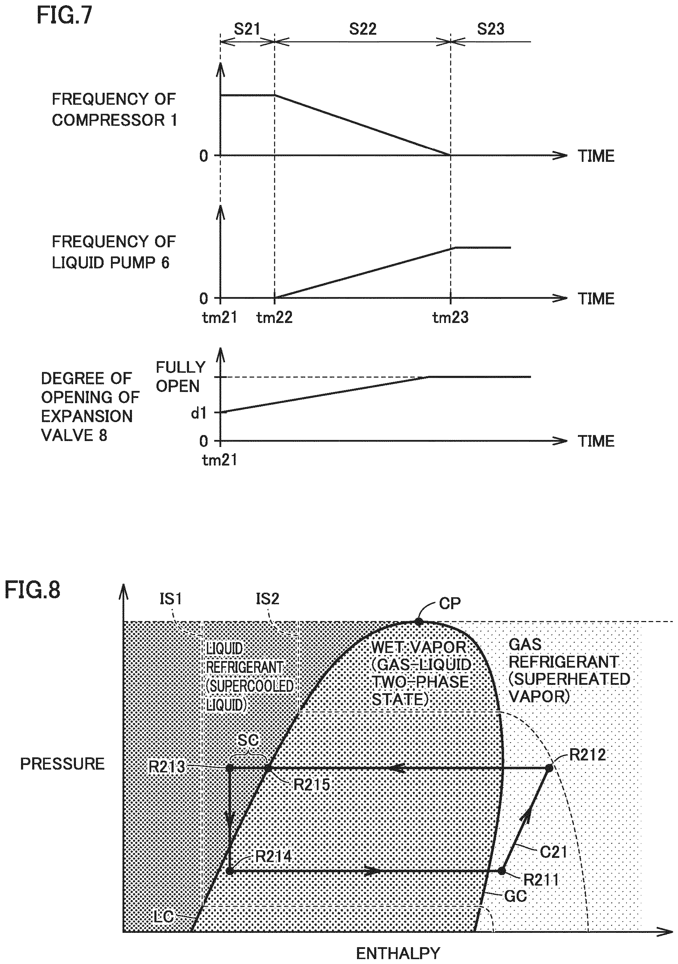

A cycle C11 in which circulation in the order of a point R11 to a point R14 is performed represents circulation of refrigerant during period S1 in Fig. 2. As shown in Fig. 3, cycle C11 is performed in a state that an indoor temperature is higher than an outdoor air temperature. This is also applicable to cycles C12 and C13 in Figs. 4 and 5, C21 to C23 in Figs. 8 to 10 showing the second embodiment, and C31 to C33 in Figs. 13 to 15 showing the third embodiment.

A process of change in state from point R11 to a point R12 represents a process of compression of refrigerant by compressor 1. A pressure and enthalpy of refrigerant in a state at point R12 are higher than a pressure and enthalpy of refrigerant in a state at point R11 owing to compression by compressor 1.

A process of change in state from point R12 to a point R13 represents a process of condensation of refrigerant by condenser 2. A difference in temperature between refrigerant in a state at an intersection R15 between a process of condensation and saturated liquid line LC and refrigerant in a state at end point R13 of the process of condensation expresses a degree of supercooling SC of refrigerant at point R13. Degree of supercooling SC is represented as a value of by how many degrees refrigerant has further lowered since liquefaction of refrigerant. Refrigerant in a state at point R13 is suctioned by liquid pump 6 when the liquid pump is turned on.

A process of change in state from point R13 to point R14 represents a process for refrigerant to pass from condenser 2 through liquid pump 6 which remains off and reach evaporator 3. Since pressure loss occurs during passage of refrigerant through a pipe and liquid pump 6 which remains off, a pressure lowers in the process from point R13 to point R14. A process of change in state from point R14 to point R11 represents a process of evaporation of refrigerant by evaporator 3.

Through the vapor compression cycle by compressor 1 during period S1, a rate of generation of liquid refrigerant in condenser 2 increases, an amount of gas refrigerant in condenser 2 decreases, and an amount of liquid refrigerant increases. Consequently, a quantity of heat absorbed from liquid refrigerant to outdoor air increases and degree of supercooling SC of refrigerant which flows out of condenser 2 increases. As degree of supercooling SC of refrigerant suctioned by liquid pump 6 is higher, a state of refrigerant is more distant from a region in a gas-liquid two-phase state and hence cavitation is less likely in liquid pump 6. In the first embodiment, when degree of supercooling SC of refrigerant in the state at point R13 is higher than a reference value, liquid pump 6 is turned on based on the determination that refrigerant suctioned by liquid pump 6 is no longer in the gas-liquid two-phase state and refrigerant has sufficiently been liquefied. The reference value can be calculated as appropriate through experiments with actual machines or simulation.

Fig. 4 is a P-h diagram showing relation between a pressure and enthalpy of refrigerant during period S2 in Fig. 2. During period S2, the vapor compression cycle by compressor 1 is continued and liquid pump 6 is turned on. Cycle C12 in which circulation in the order of points R21 to R24 in Fig. 4 is performed represents circulation of refrigerant during period S2 in Fig. 2. A process of change in state from point R21 to a point R22 represents a process of compression of refrigerant by liquid pump 6. A pressure and enthalpy of refrigerant in a state at point R22 are higher than a pressure and enthalpy of refrigerant in a state at point R21 owing to compression by liquid pump 6.

A process of change in state from point R22 to a point R23 represents a process of evaporation of refrigerant by evaporator 3. A process of change in state from point R23 to point R24 represents a process of compression of refrigerant by compressor 1. A process of change in state from point R24 to point R21 represents a process of condensation of refrigerant by condenser 2.

When a frequency of liquid pump 6 is abruptly increased, an amount of refrigerant suctioned by liquid pump 6 abruptly increases. Therefore, the amount of refrigerant suctioned by liquid pump 6 may become greater than an amount of liquid refrigerant generated in condenser 2. In that case, cavitation is more likely to occur in liquid pump 6. Then, control device 30 gradually increases an amount of refrigerant suctioned by liquid pump 6 by increasing over time a frequency of liquid pump 6.

When a frequency of compressor 1 is abruptly lowered, an amount of liquid refrigerant generated in condenser 2 abruptly decreases. Therefore, an amount of liquid refrigerant generated in condenser 2 may become smaller than an amount of refrigerant suctioned by liquid pump 6. In that case as well, cavitation is more likely to occur in liquid pump 6. Then, control device 30 gradually decreases an amount of liquid refrigerant generated in condenser 2 by lowering over time a frequency of compressor 1.

During period S2, a pressure of refrigerant in a state at end point R22 of the process of compression by liquid pump 6 (a starting point of the process of evaporation) and a pressure at end point R23 of the process of evaporation increase over time.

Fig. 5 is a P-h diagram showing relation between a pressure and enthalpy of refrigerant during period S3 in Fig. 2. During period S3, compressor 1 is off whereas the liquid pump cycle by liquid pump 6 is continued. Cycle C13 in which circulation in the order of a point R31 to a point R34 in Fig. 5 is performed represents circulation of refrigerant during period S3 in Fig. 2. A process of change in state from point R31 to a point R32 represents a process of compression of refrigerant by liquid pump 6. A process of change in state from point R32 to a point R33 represents a process of evaporation of refrigerant by evaporator 3.

A process of change in state from point R33 to point R34 represents a process for refrigerant to pass from evaporator 3 through check valve 7 and reach condenser 2. During period S3, compressor 1 is off and hence a pressure of refrigerant in the flow path between evaporator 3 and compressor 1 is higher than a pressure of refrigerant in the flow path between compressor 1 and condenser 2. Most of refrigerant enters bypass flow path 11 low in pressure resistance, passes through check valve 7, and bypasses compressor 1. Most of refrigerant passes through bypass flow path 11 while the compressor is off so that refrigerant can be prevented from staying in compressor 1 which remains off. In a process of change in state from point R33 to point R34, a pressure of refrigerant in a state at point R34 is lower than a pressure of refrigerant in a state at point R33 due to pressure loss caused during passage of refrigerant through a pipe and the check valve. A process of change in state from point R34 to point R31 represents a process of condensation of refrigerant by condenser 2.

A condition for turn-on of liquid pump 6 in the first embodiment is that degree of supercooling SC exceeds a reference value. A condition for turn-on of liquid pump 6 may be any condition so long as it can be determined that refrigerant suctioned by liquid pump 6 is no longer in the gas-liquid two-phase state and refrigerant has sufficiently been liquefied, and for example, it may be a condition that an operation by compressor 1 continues for a reference period of time.

In the first embodiment, bypass flow path 11 includes a check valve. Bypass flow path 11 does not necessarily have to include a check valve, and it may be configured in any manner so long as refrigerant is allowed to pass when a pressure of refrigerant in the flow path between evaporator 3 and compressor 1 is higher than a pressure of refrigerant in the flow path between compressor 1 and condenser 2. For example, it may be configured such that bypass flow path 11 includes an on-off valve and control device 30 controls the on-off valve to open when a pressure of refrigerant in the flow path between evaporator 3 and compressor 1 is higher than a pressure of refrigerant in the flow path between compressor 1 and condenser 2.

In the refrigeration cycle apparatus according to the first embodiment, the liquid pump which performs the liquid pump cycle is turned on after turn-on of the compressor. As the compressor performs the vapor compression cycle before turn-on of the liquid pump, a rate of generation of liquid refrigerant in the condenser increases and an amount of liquid refrigerant from the condenser increases. Consequently, occurrence of cavitation in the liquid pump is suppressed and stability of a low-outdoor-temperature cooling operation can be improved.

According to the first embodiment, since refrigerant bypasses the compressor by passing through the bypass flow path while the compressor remains off, refrigerant can be prevented from staying in the compressor which remains off.

According to the first embodiment, when a degree of supercooling of refrigerant suctioned by the liquid pump is higher than a reference value, the control device turns on the liquid pump so that occurrence of cavitation in the liquid pump can further be suppressed.

According to the first embodiment, the control device increases over time an amount of refrigerant discharged per unit time by the liquid pump after turn-on of the liquid pump and decreases over time an amount of refrigerant discharged per unit time by the compressor after turn-on of the liquid pump, so that occurrence of cavitation in the liquid pump can further be suppressed.

According to the first embodiment, the indoor fan promotes heat exchange in the evaporator and the outdoor fan promotes heat exchange in the condenser. Therefore, a rate of generation of liquid refrigerant in the condenser in the vapor compression cycle is increased. Consequently, start of the liquid pump cycle can be earlier.

### Second Embodiment.

An example in which refrigerant from the liquid pump flows into the evaporator through a pressure regulation valve will be described in a second embodiment. The second embodiment is different from the first embodiment in that the pressure regulation valve is connected between the liquid pump and the evaporator. Since the second embodiment is otherwise similar, description will not be repeated.

Fig. 6 is a functional block diagram showing a configuration of a refrigeration cycle apparatus 200 according to the second embodiment. In refrigeration cycle apparatus 200 shown in Fig. 6, indoor unit 10 and control device 30 in Fig. 1 are replaced with an indoor unit 12 and a control device 32, respectively. As shown in Fig. 6, indoor unit 12 includes an expansion valve 8 as the pressure regulation valve in addition to the features included in indoor unit 10 shown in Fig. 1. Expansion valve 8 is connected between liquid pump 6 and evaporator 3. A degree of opening of expansion valve 8 is adjusted by control device 32. Expansion valve 8 is implemented, for example, by an electronically controlled expansion valve (a linear expansion valve: LEV).

Fig. 7 shows together a time chart of a frequency of liquid pump 6, a time chart of a frequency of compressor 1, and a time chart of a degree of opening of expansion valve 8 in the second embodiment. Periods S21 to S23 in Fig. 7 correspond to periods S1 to S3 in Fig. 2, respectively. Since operations by compressor 1 and liquid pump 6 during periods S21 to S23 are the same as in the first embodiment, description will not be repeated. As shown in Fig. 7, a degree of opening of expansion valve 8 is set to a reference degree of opening d1 at time tm21 at which compressor 1 is on. A degree of opening of expansion valve 8 increases until the expansion valve is fully opened over time. Reference degree of opening d1 can be determined as appropriate through experiments with actual machines or simulation.

A degree of opening of expansion valve 8 may be adjusted, for example, such that a degree of superheating of refrigerant suctioned into compressor 1, a degree of superheating of refrigerant discharged from compressor 1, or a temperature of refrigerant discharged from compressor 1 attains to a reference value. A degree of opening of expansion valve 8 may be adjusted such that a difference in pressure between refrigerant discharged by liquid pump 6 and suctioned refrigerant attains to a reference value. A degree of opening of expansion valve 8 may be adjusted such that a degree of supercooling of refrigerant which flows out of condenser 2 attains to a reference value.

Fig. 8 is a P-h diagram showing relation between a pressure and enthalpy of refrigerant during period S21 in Fig. 7. Cycle C21 in which circulation in the order of points R211 to R214 in Fig. 8 is performed represents circulation of refrigerant during period S21 in Fig. 7. A process of change in state from point R211 to a point R212 represents a process of compression of refrigerant by compressor 1. A process of change in state from point R212 to a point R213 represents a process of condensation of refrigerant by condenser 2. A process of change in state from point R213 to point R214 represents a process of decompression of refrigerant by expansion valve 8. A process of change in state from point R214 to point R211 represents a process of evaporation of refrigerant by evaporator 3.

Cycle C21 shown in Fig. 8 is similar to a cycle representing a normal cooling operation performed when an indoor temperature is lower than an outdoor air temperature (for example, during summer). In the second embodiment, expansion valve 8 decompresses refrigerant such that refrigerant can evaporate in a room even though the indoor temperature is lower than the outdoor air temperature. The refrigeration cycle apparatus according to the second embodiment can perform a normal cooling operation in addition to the low-outdoor-temperature cooling operation.

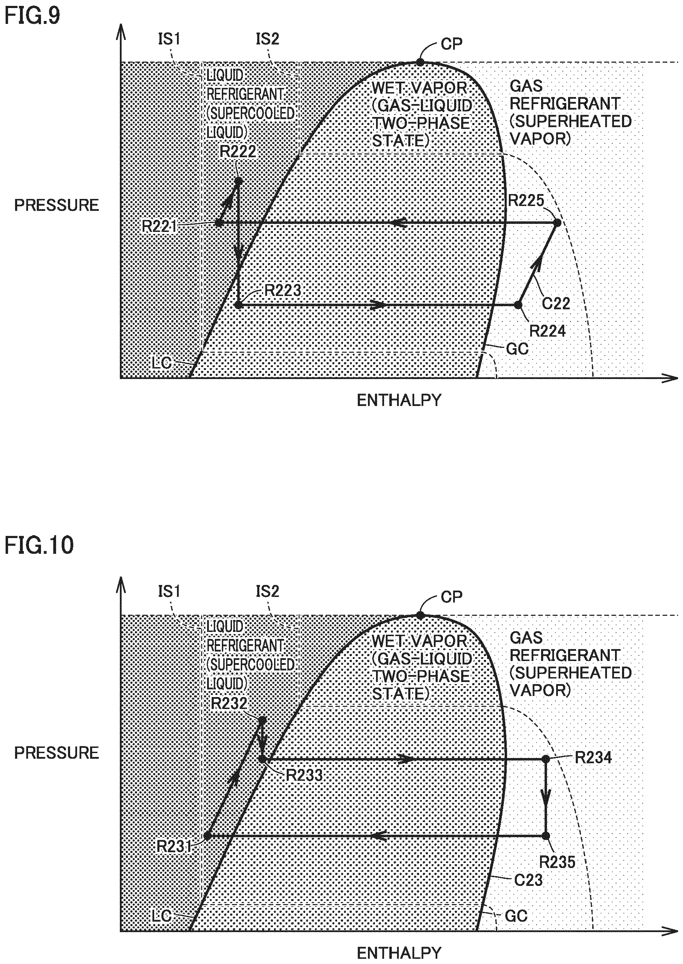

Liquid pump 6 is turned on when degree of supercooling SC of refrigerant in a state at point R213 is higher than a reference value also in the second embodiment. Fig. 9 is a P-h diagram showing relation between a pressure and enthalpy of refrigerant during a period S22 in Fig. 7. A cycle C22 in which circulation from a point R221 to a point R225 in Fig. 9 is performed represents circulation of refrigerant during period S22 in Fig. 7. A process of change in state from point R221 to point R222 represents a process of compression of refrigerant by liquid pump 6. A process of change in state from point R222 to point R223 represents a process of decompression by expansion valve 8. A process of change in state from point R223 to point R224 represents a process of evaporation by evaporator 3. A process of change in state from point R224 to point R225 represents a process of compression of refrigerant by compressor 1. A process of change in state from point R225 to point R221 represents a process of condensation of refrigerant by condenser 2.

During period S22, control device 32 increases over time a frequency of liquid pump 6 and increases an amount of refrigerant suctioned by liquid pump 6 with increase in liquid refrigerant in condenser 2. A pressure of refrigerant in a state at end point R222 of the process of compression by liquid pump 6 (a starting point of the process of decompression) increases over time. In the second embodiment, control device 32 increases over time a degree of opening of expansion valve 8 to lower a decompression function of expansion valve 8. A pressure of refrigerant in a state at end point R223 of the process of decompression (a starting point of the process of evaporation) and a pressure of refrigerant in a state at end point R224 of the process of evaporation both increase.

Fig. 10 is a P-h diagram showing relation between a pressure and enthalpy of refrigerant during period S23 in Fig. 7. Cycle C23 in which circulation in the order of points R231 to R235 in Fig. 10 is performed represents circulation of refrigerant during period S23 in Fig. 7. A process of change in state from point R231 to a point R232 represents a process of compression of refrigerant by liquid pump 6. A process of change in state from point R232 to a point R233 represents a process for refrigerant from liquid pump 6 to pass through expansion valve 8 and reach evaporator 3. Since pressure loss occurs during passage of refrigerant through a pipe and expansion valve 8 that is fully opened, a pressure lowers in the process from point R232 to point R233.

A process of change in state from point R233 to a point R234 represents a process of evaporation of refrigerant by evaporator 3. A process of change in state from point R234 to point R235 represents a process for refrigerant from evaporator 3 to pass through check valve 7 and reach condenser 2. A process of change in state from point R235 to point R231 represents a process of condensation of refrigerant by condenser 2.

According to the refrigeration cycle apparatus according to the second embodiment above, an effect the same as in the first embodiment can be obtained. Furthermore, in the second embodiment, refrigerant from the condenser flows into the evaporator as being decompressed in the vapor compression cycle (see Fig. 8) so that a difference between refrigerant in the evaporator and an indoor temperature is greater than in the first embodiment and a difference between refrigerant in the condenser and an outdoor temperature is also greater than in the first embodiment. Therefore, efficiency in heat exchange between refrigerant and air in the evaporator and the condenser is enhanced and a rate of generation of liquid refrigerant in the condenser is higher than in the first embodiment. Consequently, time required for an amount of liquid refrigerant from the condenser to be an amount required for the liquid pump cycle can be decreased and start of the liquid pump cycle can be earlier than in the first embodiment.

### Third Embodiment.

An example in which refrigerant from the compressor or the check valve flows into the condenser through a pressure regulation valve will be described in a third embodiment. The third embodiment is different from the first embodiment in that a pressure regulation valve is connected between the compressor and the condenser. Since the third embodiment is otherwise similar, description will not be repeated.

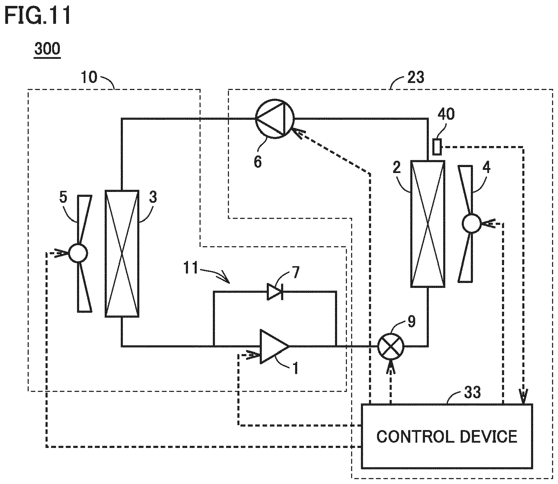

Fig. 11 is a functional block diagram showing a configuration of a refrigeration cycle apparatus 300 according to the third embodiment. In refrigeration cycle apparatus 300 shown in Fig. 11, outdoor unit 20 and control device 30 in Fig. 1 are replaced with an outdoor unit 23 and a control device 33, respectively. As shown in Fig. 11, outdoor unit 23 includes an expansion valve 9 as a pressure regulation valve in addition to features included in outdoor unit 20 shown in Fig. 1. Expansion valve 9 is connected between compressor 1 and condenser 2. A degree of opening of expansion valve 9 is adjusted by control device 33. Expansion valve 9 is implemented, for example, by an electronically controlled expansion valve (a linear expansion valve: LEV).

Fig. 12 shows together a time chart of a frequency of liquid pump 6, a time chart of a frequency of compressor 1, and a time chart of a degree of opening of expansion valve 9 in the third embodiment. Periods S31 to S33 in Fig. 12 correspond to periods S1 to S3 in Fig. 2, respectively. Since operations by compressor 1 and liquid pump 6 during periods S31 to S33 are the same as in the first embodiment, description will not be repeated. As shown in Fig. 12, a degree of opening of expansion valve 9 is set to a reference degree of opening d2 at time tm31 at which compressor 1 is on. A degree of opening of expansion valve 9 increases until the expansion valve is fully opened over time. Reference degree of opening d2 can be determined as appropriate through experiments with actual machines or simulation.

A degree of opening of expansion valve 9 may be adjusted, for example, such that a degree of superheating of refrigerant suctioned into compressor 1, a degree of superheating of refrigerant discharged from compressor 1, or a temperature of refrigerant discharged from compressor 1 attains to a reference value. A degree of opening of expansion valve 9 may be adjusted such that a difference in pressure between refrigerant discharged by liquid pump 6 and suctioned refrigerant attains to a reference value. A degree of opening of expansion valve 9 may be adjusted such that a degree of supercooling of refrigerant which flows out of condenser 2 attains to a reference value.

Fig. 13 is a P-h diagram showing relation between a pressure and enthalpy of refrigerant during period S31 in Fig. 12. Cycle C31 in which circulation in the order of points R311 to R315 in Fig. 13 is performed represents circulation of refrigerant during period S31 in Fig. 12. A process of change in state from point R311 to a point R312 represents a process of compression of refrigerant by compressor 1. A process of change in state from point R312 to a point R313 represents a process of decompression by expansion valve 9. A process of change in state from point R313 to a point R314 represents a process of condensation of refrigerant by condenser 2. A process of change in state from point R314 to point R315 represents a process for refrigerant from condenser 2 to pass through liquid pump 6 that remains off and reach evaporator 3. A process of change in state from point R315 to point R311 represents a process of evaporation of refrigerant by evaporator 3.

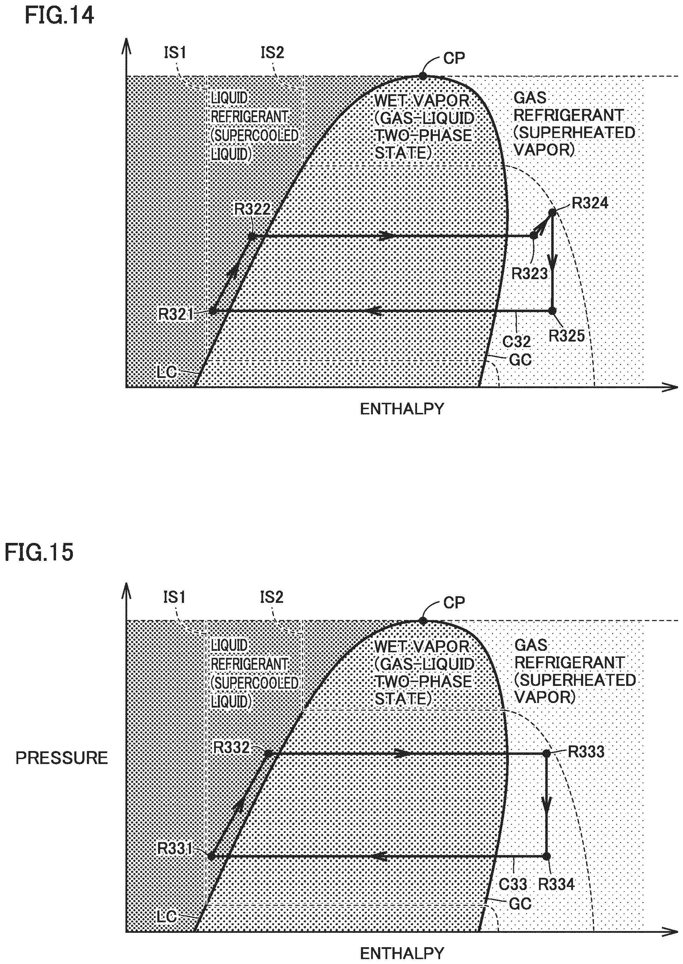

Liquid pump 6 is turned on when degree of supercooling SC of refrigerant in a state at point R314 is higher than a reference value also in the third embodiment. Fig. 14 is a P-h diagram showing relation between a pressure and enthalpy of refrigerant during period S32 in Fig. 12. A cycle C32 in which circulation in the order of a point R321 to a point R325 in Fig. 14 is performed represents circulation of refrigerant during period S32 in Fig. 12. A process of change in state from point R321 to a point R322 represents a process of compression of refrigerant by liquid pump 6. A process of change in state from point R322 to a point R323 represents a process of evaporation of refrigerant by evaporator 3. A process of change in state from point R323 to a point R324 represents a process of compression of refrigerant by compressor 1. A process of change in state from point R324 to point R325 represents a process of decompression of refrigerant by expansion valve 9. A process of change in state from point R325 to point R321 represents a process of condensation of refrigerant by condenser 2.

Fig. 15 is a P-h diagram showing relation between a pressure and enthalpy of refrigerant during period S33 in Fig. 12. Cycle C33 in which circulation in the order of points R331 to R334 in Fig. 15 is performed represents circulation of refrigerant during period S33 in Fig. 12. A process of change in state from point R331 to a point R332 represents a process of compression of refrigerant by liquid pump 6. A process of change in state from point R332 to a point R333 represents a process of evaporation of refrigerant by evaporator 3. A process of change in state from point R333 to a point R334 represents a process for refrigerant from evaporator 3 to pass through check valve 7 and reach condenser 2. A process of change in state from point R334 to point R331 represents a process of condensation of refrigerant by condenser 2.

The refrigeration cycle apparatus according to the third embodiment above can achieve an effect the same as in the first embodiment. Furthermore, in the third embodiment, in transition from a state that the vapor compression cycle and the liquid pump cycle are simultaneously performed (see Fig. 14) to a state that the vapor compression cycle is stopped and the liquid pump cycle is performed (see Fig. 15), a pressure of refrigerant in the process of evaporation is higher than a pressure of refrigerant in the process of condensation, and relation in magnitude therebetween is less likely to change. Therefore, in the refrigeration cycle apparatus according to the third embodiment, abrupt change in pressure is less likely to occur in transition from the vapor compression cycle to the liquid pump cycle and the liquid pump cycle can be continued in a stable manner.

In the refrigeration cycle apparatus according to the third embodiment, refrigerant from the compressor or the check valve flows into the condenser as being decompressed by the pressure regulation valve. Therefore, a pressure in the process of condensation (a pressure of refrigerant suctioned by the liquid pump) is lower than in the first and second embodiments. Consequently, load imposed on the liquid pump by receiving a pressure of refrigerant can be lessened.

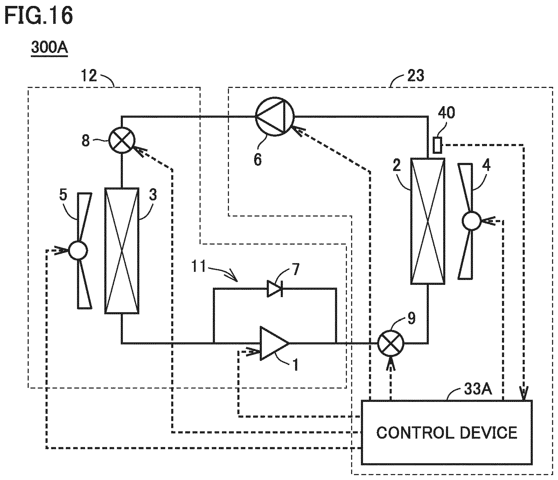

Fig. 16 is a functional block diagram showing a configuration of a refrigeration cycle apparatus 300A according to a modification of the third embodiment. In refrigeration cycle apparatus 300A shown in Fig. 16, indoor unit 10 and control device 33 in Fig. 11 are replaced with indoor unit 12 and a control device 33 A, respectively. Indoor unit 12 is similar to indoor unit 12 shown in Fig. 6 in connection with the second embodiment. Refrigeration cycle apparatus 300A can also obtain an effect the same as in the second and third embodiments.

Combination of embodiments disclosed herein as appropriate is also intended unless combination is inconsistent. It should be understood that the embodiments disclosed herein are illustrative and non-restrictive in every respect.

### REFERENCE SIGNS LIST

1 compressor; 2 condenser; 3 evaporator; 4 outdoor fan; 5 indoor fan; 6 liquid pump; 7 check valve; 8, 9 expansion valve; 10, 12 indoor unit; 11 bypass flow path; 20, 23 outdoor unit; 30, 32, 33, 33A control device; 40 temperature sensor; 100, 200, 300, 300A refrigeration cycle apparatus

## Claims

1. A refrigeration cycle apparatus (100, 200, 300, 300A) which performs cooling by circulation of refrigerant, the refrigeration cycle apparatus (100, 200, 300, 300A) comprising:
an evaporator (3) arranged in a first space;
a condenser (2) arranged in a second space, wherein the temperature of the first space is higher than the temperature of the second space;
a pump (6) configured to compress the refrigerant from the condenser (2) and output the refrigerant to the evaporator (3);
a compressor (1) configured to compress the refrigerant from the evaporator (3) and output the refrigerant to the condenser (2); and
a control device (30, 32, 33, 33A) configured to control the pump (6) and the compressor (1) to cool the first space,
the control device (30, 32, 33, 33A) **characterized by** being configured to
turn on the pump (6) after turn-on of the compressor (1),
control the pump (6) to increase over time an amount of the refrigerant discharged per unit time by the pump (6) after turn-on of the pump (6), and
control the compressor (1) to decrease over time an amount of the refrigerant discharged per unit time by the compressor (1) after turn-on of the pump (6).

2. The refrigeration cycle apparatus (100, 200, 300, 300A) according to claim 1, further comprising a bypass flow path (11) configured to
connect a first flow path between the evaporator (3) and the compressor (1) and a second flow path between the compressor (1) and the condenser (2) to each other, and
allow the refrigerant to pass when a pressure of the refrigerant in the first flow path is higher than a pressure of the refrigerant in the second flow path.

3. The refrigeration cycle apparatus (100, 200, 300, 300A) according to claim 2, wherein
the bypass flow path (11) comprises a check valve (7) configured to allow the refrigerant to pass when a pressure of the refrigerant in the first flow path is higher than a pressure of the refrigerant in the second flow path.

4. The refrigeration cycle apparatus (100, 200, 300, 300A) according to any one of claims 1 to 3, wherein
the control device (30, 32, 33, 33A) is configured to turn on the pump (6) when a degree of supercooling of the refrigerant suctioned by the pump (6) is higher than a reference value.

5. The refrigeration cycle apparatus (100, 200, 300, 300A) according to claim 4, further comprising a temperature sensor (40) arranged in a third flow path between the condenser (2) and the pump (6), the temperature sensor (40) being configured to measure a temperature of the refrigerant in the third flow path, wherein
the control device (30, 32, 33, 33A) is configured to calculate the degree of supercooling by using the temperature.

6. The refrigeration cycle apparatus (100, 200, 300, 300A) according to any one of claims 1 to 3, wherein
the control device (30, 32, 33, 33A) is configured to turn on the pump (6) in succession to an operation of the compressor (1) which continues for a reference period of time.

7. The refrigeration cycle apparatus (100, 200, 300, 300A) according to any one of claims 1 to 6, further comprising:
a first blower apparatus (5) configured to send air to the evaporator (3); and
a second blower apparatus (4) configured to send air to the condenser (2).

8. The refrigeration cycle apparatus (200, 300A) according to any one of claims 1 to 7, further comprising a first pressure regulation valve (8) connected between the evaporator (3) and the pump (6), wherein
a degree of opening of the first pressure regulation valve (8) is larger after turn-on than before turn-on of the compressor (1).

9. The refrigeration cycle apparatus (200, 300A) according to claim 8, wherein
a degree of opening of the first pressure regulation valve (8) is set to a first reference degree of opening at turn-on of the compressor (1).

10. The refrigeration cycle apparatus (300A) according to claim 8 or 9, further comprising a second pressure regulation valve (9) connected between the compressor (1) and the condenser (2), wherein
a degree of opening of the second pressure regulation valve (9) is larger after turn-on than before turn-on of the compressor (1).

11. The refrigeration cycle apparatus (300A) according to claim 10, wherein
a degree of opening of the second pressure regulation valve (9) is set to a second reference degree of opening at turn-on of the compressor (1).

12. The refrigeration cycle apparatus (300) according to any one of claims 1 to 7, further comprising a pressure regulation valve (9) connected between the compressor (1) and the condenser (2), wherein
a degree of opening of the pressure regulation valve (9) is larger after turn-on than before turn-on of the compressor (1).

13. The refrigeration cycle apparatus (300) according to claim 12, wherein
a degree of opening of the pressure regulation valve (9) is set to a reference degree of opening at turn-on of the compressor (1).

## Patentansprüche

1. Kältekreislaufvorrichtung (100, 200, 300, 300A), die durch Zirkulation eines Kühlmittels eine Kühlung durchführt, wobei die Kältekreislaufvorrichtung (100, 200, 300, 300A) Folgendes umfasst:
einen Verdampfer (3), der in einem ersten Raum angeordnet ist;
einen Kondensator (2), der in einem zweiten Raum angeordnet ist, wobei die Temperatur des ersten Raums höher als die Temperatur des zweiten Raums ist;
eine Pumpe (6), die ausgelegt ist, das Kühlmittel von dem Kondensator (2) zu komprimieren und das Kühlmittel an den Verdampfer (3) auszugeben;
einen Kompressor (1), der ausgelegt ist, das Kühlmittel von dem Verdampfer (3) zu komprimieren und das Kühlmittel an den Kondensator (2) auszugeben; und
eine Steuervorrichtung (30, 32, 33, 33A), die ausgelegt ist, die Pumpe (6) und den Kompressor (1) zu steuern, um den ersten Raum zu kühlen,
wobei die Steuervorrichtung (30, 32, 33, 33A) **dadurch gekennzeichnet ist, dass** sie ausgelegt ist,
die Pumpe (6) nach Einschalten des Kompressors (1) einzuschalten,
die Pumpe (6) so zu steuern, dass nach Einschalten der Pumpe (6) über die Zeit eine Menge des Kühlmittels pro Zeiteinheit durch die Pumpe (6) abgeführt wird, und
den Kompressor (1) so zu steuern, dass nach Einschalten der Pumpe (6) über die Zeit eine Menge des Kühlmittels pro Zeiteinheit durch den Kompressor (1) abgeführt wird.

2. Kältekreislaufvorrichtung (100, 200, 300, 300A) nach Anspruch 1, ferner umfassend einen Nebenstrompfad (11), der ausgelegt ist,
einen ersten Strompfad zwischen dem Verdampfer (3) und dem Kompressor (1) und einen zweiten Strompfad zwischen dem Kompressor (1) und dem Kondensator (2) miteinander zu verbinden, und
einem Kühlmittel das Durchlaufen zu ermöglichen, wenn ein Druck des Kühlmittels in dem ersten Strompfad höher als ein Druck des Kühlmittels in dem zweiten Strompfad ist.

3. Kältekreislaufvorrichtung (100, 200, 300, 300A) nach Anspruch 2, wobei
der Nebenstrompfad (11) ein Prüfventil (7) umfasst, das ausgelegt ist, dem Kühlmittel das Durchlaufen zu ermöglichen, wenn ein Druck des Kühlmittels in dem ersten Strompfad höher als der Druck des Kühlmittels in dem zweiten Strompfad ist.

4. Kältekreislaufvorrichtung (100, 200, 300, 300A) nach einem der Ansprüche 1 bis 3, wobei
die Steuervorrichtung (30, 32, 33, 33A) ausgelegt ist, um die Pumpe (6) einzuschalten, wenn ein Unterkühlungsgrad des durch die Pumpe (6) angesaugten Kühlmittels höher als ein Referenzwert ist.

5. Kältekreislaufvorrichtung (100, 200, 300, 300A) nach Anspruch 4, ferner umfassend einen Temperatursensor (40), der in einem dritten Strompfad zwischen dem Kondensator (2) und der Pumpe (6) angeordnet ist, wobei der Temperatursensor (40) ausgelegt ist, eine Temperatur des Kühlmittels in dem dritten Strompfad zu messen, wobei
die Steuervorrichtung (30, 32, 33, 33A) ausgelegt ist, den Unterkühlungsgrad durch Verwendung der Temperatur zu berechnen.

6. Kältekreislaufvorrichtung (100, 200, 300, 300A) nach einem der Ansprüche 1 bis 3, wobei
die Steuervorrichtung (30, 32, 33, 33A) ausgelegt ist, die Pumpe (6) nachfolgend auf einen Betrieb des Kompressors (1) einzuschalten, was für einen Referenzzeitraum fortgesetzt wird.

7. Kältekreislaufvorrichtung (100, 200, 300, 300A) nach einem der Ansprüche 1 bis 6, ferner umfassend:
eine erste Gebläsevorrichtung (5), die ausgelegt ist, Luft an den Verdampfer (3) zu senden; und
eine zweite Gebläsevorrichtung (4), die ausgelegt ist, Luft an den Kondensator (2) zu senden.

8. Kältekreislaufvorrichtung (200, 300A) nach einem der Ansprüche 1 bis 7, ferner umfassend ein erstes Druckregulierungsventil (8), das zwischen den Verdampfer (3) und die Pumpe (6) geschaltet ist, wobei
ein Öffnungsgrad des ersten Druckregulierungsventils (8) nach dem Einschalten des Kompressors (1) größer als vor dem Einschalten ist.

9. Kältekreislaufvorrichtung (200, 300A) nach Anspruch 8, wobei
ein Öffnungsgrad des ersten Druckregulierungsventils (8) beim Einschalten des Kompressors (1) auf einen ersten Referenzöffnungsgrad eingestellt wird.

10. Kältekreislaufvorrichtung (300A) nach Anspruch 8 oder 9, ferner umfassend ein zweites Druckregulierungsventil (9), das zwischen den Kompressor (1) und den Kondensator (2) geschaltet ist, wobei
ein Öffnungsgrad des zweiten Druckregulierungsventils (9) nach dem Einschalten des Kompressors (1) größer als vor dem Einschalten ist.

11. Kältekreislaufvorrichtung (300A) nach Anspruch 10, wobei
ein Öffnungsgrad des zweiten Druckregulierungsventils (9) beim Einschalten des Kompressors (1) auf einen zweiten Referenzöffnungsgrad eingestellt wird.

12. Kältekreislaufvorrichtung (300) nach einem der Ansprüche 1 bis 7, ferner umfassend ein Druckregulierungsventil (9), das zwischen den Kompressor (1) und den Kondensator (2) geschaltet ist, wobei
ein Öffnungsgrad des Druckregulierungsventils (9) nach dem Einschalten des Kompressors (1) größer als vor dem Einschalten ist.

13. Kältekreislaufvorrichtung (300) nach Anspruch 12, wobei
ein Öffnungsgrad des Druckregulierungsventils (9) beim Einschalten des Kompressors (1) auf einen Referenzöffnungsgrad eingestellt wird.

## Revendications

1. Appareil à cycle de réfrigération (100, 200, 300, 300A) qui effectue un refroidissement par circulation de fluide frigorigène, l'appareil à cycle de réfrigération (100, 200, 300, 300A) comprenant :
un évaporateur (3) agencé dans un premier espace ;
un condenseur (2) agencé dans un deuxième espace, dans lequel la température du premier espace est supérieure à la température du deuxième espace ;
une pompe (6) configurée pour comprimer le fluide frigorigène provenant du condenseur (2) et délivrer en sortie le fluide frigorigène à l'évaporateur (3) ;
un compresseur (1) configuré pour comprimer le fluide frigorigène provenant de l'évaporateur (3) et délivrer en sortie le fluide frigorigène au condenseur (2) ; et
un dispositif de commande (30, 32, 33, 33A) configuré pour commander la pompe (6) et le compresseur (1) pour refroidir le premier espace,
le dispositif de commande (30, 32, 33, 33A) étant **caractérisé en ce qu'**il est configuré pour
mettre en marche la pompe (6) après la mise en marche du compresseur (1),
commander la pompe (6) pour augmenter au cours du temps une quantité du fluide frigorigène évacuée par unité de temps par la pompe (6) après la mise en marche de la pompe (6), et
commander le compresseur (1) pour diminuer au cours du temps une quantité du fluide frigorigène évacuée par unité de temps par le compresseur (1) après la mise en marche de la pompe (6).

2. Appareil à cycle de réfrigération (100, 200, 300, 300A) selon la revendication 1, comprenant en outre un trajet d'écoulement de dérivation (11) configuré pour
raccorder un premier trajet d'écoulement entre l'évaporateur (3) et le compresseur (1) et un deuxième trajet d'écoulement entre le compresseur (1) et le condenseur (2) les uns aux autres, et
permettre au fluide frigorigène de passer lorsqu'une pression du fluide frigorigène dans le premier trajet d'écoulement est supérieure à une pression du fluide frigorigène dans le deuxième trajet d'écoulement.

3. Appareil à cycle de réfrigération (100, 200, 300, 300A) selon la revendication 2, dans lequel
le trajet d'écoulement de dérivation (11) comprend un clapet antiretour (7) configuré pour permettre au fluide frigorigène de passer lorsqu'une pression du fluide frigorigène dans le premier trajet d'écoulement est supérieure à une pression du fluide frigorigène dans le deuxième trajet d'écoulement.

4. Appareil à cycle de réfrigération (100, 200, 300, 300A) selon l'une quelconque des revendications 1 à 3, dans lequel
le dispositif de commande (30, 32, 33, 33A) est configuré pour mettre en marche la pompe (6) lorsque un degré de surfusion du fluide frigorigène aspiré par la pompe (6) est supérieur à une valeur de référence.

5. Appareil à cycle de réfrigération (100, 200, 300, 300A) selon la revendication 4, comprenant en outre un capteur de température (40) agencé dans un troisième trajet d'écoulement entre le condenseur (2) et la pompe (6), le capteur de température (40) étant configuré pour mesurer une température du fluide frigorigène dans le troisième trajet d'écoulement, dans lequel
le dispositif de commande (30, 32, 33, 33A) est configuré pour calculer le degré de surfusion en utilisant la température.

6. Appareil à cycle de réfrigération (100, 200, 300, 300A) selon l'une quelconque des revendications 1 à 3, dans lequel
le dispositif de commande (30, 32, 33, 33A) est configuré pour mettre en marche la pompe (6) consécutivement à un fonctionnement du compresseur (1) qui continue pendant une période de référence.

7. Appareil à cycle de réfrigération (100, 200, 300, 300A) selon l'une quelconque des revendications 1 à 6, comprenant en outre :
un premier appareil de soufflante (5) configuré pour envoyer de l'air à l'évaporateur (3) ; et
un deuxième appareil de soufflante (4) configuré pour envoyer de l'air au condenseur (2).

8. Appareil à cycle de réfrigération (200, 300A) selon l'une quelconque des revendications 1 à 7, comprenant en outre une première vanne de régulation de pression (8) raccordée entre l'évaporateur (3) et la pompe (6), dans lequel
un degré d'ouverture de la première vanne de régulation de pression (8) est plus élevé après la mise en marche qu'avant la mise en marche du compresseur (1).

9. Appareil à cycle de réfrigération (200, 300A) selon la revendication 8, dans lequel
un degré d'ouverture de la première vanne de régulation de pression (8) est réglé à un premier degré d'ouverture de référence lors de la mise en marche du compresseur (1).

10. Appareil à cycle de réfrigération (300A) selon la revendication 8 ou 9, comprenant en outre une deuxième vanne de régulation de pression (9) raccordée entre le compresseur (1) et le condenseur (2), dans lequel
un degré d'ouverture de la deuxième vanne de régulation de pression (9) est plus élevé après la mise en marche qu'avant la mise en marche du compresseur (1).

11. Appareil à cycle de réfrigération (300A) selon la revendication 10, dans lequel
un degré d'ouverture de la deuxième vanne de régulation de pression (9) est réglé à un deuxième degré d'ouverture de référence lors de la mise en marche du compresseur (1).

12. Appareil à cycle de réfrigération (300) selon l'une quelconque des revendications 1 à 7, comprenant en outre une vanne de régulation de pression (9) raccordée entre le compresseur (1) et le condenseur (2), dans lequel
un degré d'ouverture de la vanne de régulation de pression (9) est plus élevé après la mise en marche qu'avant la mise en marche du compresseur (1).

13. Appareil à cycle de réfrigération (300) selon la revendication 12, dans lequel
un degré d'ouverture de la vanne de régulation de pression (9) est réglé à un degré d'ouverture de référence lors de la mise en marche du compresseur (1).
